(19)

**Europäisches Patentamt**

**European Patent Office**

**Office européen des brevets**

(11) **EP 4 366 104 A1**

(12) **EUROPEAN PATENT APPLICATION**

(43) Date of publication:
**08.05.2024 Bulletin 2024/19**

(21) Application number: **22315295.0**

(22) Date of filing: **02.11.2022**

(51) International Patent Classification (IPC):
*H02H 7/26* (2006.01)    *H02H 1/00* (2006.01)

(52) Cooperative Patent Classification (CPC):
**H02H 7/265;** H02H 1/0092

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Supergrid Institute**
  **69100 Villeurbanne (FR)**
• **Université Paris-Saclay**
  **91190 Saint-Aubin (FR)**
• **CentraleSupélec**
  **91190 - Gif sur Yvette (FR)**
• **Université Grenoble Alpes**
  **38400 Saint-Martin-d'Hères (FR)**
• **Centre National de la Recherche Scientifique**
  **75016 Paris (FR)**

• **Institut Polytechnique de Grenoble**
  **38000 Grenoble (FR)**

(72) Inventors:
• **Verrax, Paul**
  **69007 LYON (FR)**
• **Bertinato, Alberto**
  **69007 LYON (FR)**
• **Kieffer, Michel**
  **69007 LYON (FR)**
• **Raison, Bertrand**
  **69007 LYON (FR)**
• **Milhiet, Louis**
  **69007 LYON (FR)**

(74) Representative: **Opilex**
  **32, rue Victor Lagrange**
  **69007 Lyon (FR)**

(54) **TRANSIENT BASED METHOD FOR CONTROLLING PROTECTION ACTIONS IN AN ELECTRIC POWER TRANSMISSION AND/ OR DISTRIBUTION SYSTEM**

(57)    The invention concerns a transient-based method for controlling protection actions in an electric power transmission and/ or distribution system having at least one current transmission line comprising the following steps :
- measurement (10) of voltage and/or current at a specific location in the said power system of at least one travelling wave due to a suspected fault having occurred on a current transmission line,
- estimate (20) initial voltage waveform at fault location by using an inverse physical wave propagation model applied to the measurements concerning the at least one travelling wave, and taking into account the distance between said specific location and the fault location,
- identification and classification (30) of the fault in function of estimated initial voltage waveform at fault location,
- control (40) of protection actions in function of the fault classification.

Figure 1

**Description**

FIELD OF THE INVENTION

The invention relates in general to high and medium voltage electric power transmission and/or distribution system, and more specifically to fault identification of transmission and/or distribution lines comprised in an electric power transmission and/or distribution system.

In particular, the invention relates to a method for identifying lightning induced faults on aerial transmission lines in high or medium voltage DC or AC grids and a related device for identifying and in particular classifying faults in high or medium voltage DC or AC grids in order to be able to take appropriate protection actions for the concerned grid or part of grid.

BACKGROUND AND PRIOR ART

Electrical power transmission and in particular HVDC power transmission is becoming more and more important in particular because of the steadily rising need for bulk power delivery and power grid interconnections.

One attractive feature of HVDC transmission recognized is also that the direction of power transmission can be chosen by changing the direction of current.

The introduction of Multi-Terminal high voltage Direct Current (MTDC) grids has recently been the subject of many studies. In the future, such a grid would act as a backbone to the existing AC network, providing better interconnection over large distances between renewable energy sources and consumption area as well as integration of large offshore wind power plants. Among several technical and non-technical barriers still to overcome for the development of HVDC meshed grids, the protection of the lines is seen as one of the most challenging. The differences from the High Voltage Alternative Current (HVAC) case require the development of new solutions, both regarding the breaker technologies and the protection strategies.

The main tasks of a protection strategy include fault detection, faulty component identification and tripping of the breakers. Analysis of the fault such as precise fault location can generally be performed *post mortem*, *i.e*, after the fault is cleared. If the breakers are triggered before the faulty component is identified so that a large part of the grid is deenergized, one refers to as a non-selective fault clearing strategy. On the opposite, selective fault clearing strategies consist in identifying the faulty component so that only the corresponding breakers are triggered, which is considered preferable since it minimizes the impact of the fault on the grid. In such a strategy, breaking modules located at the end of each line are responsible for the protection of their respective line.

Overall, the protection strategy must act if and only if actions are needed and for instance must be immune to changes caused by normal operations, which is referred to as reliability. Finally, the protection algorithm must operate fast enough to cope with Direct Current Circuit Breaker (DCCB) capabilities, e.g., in less than a millisecond, which makes use of telecommunication not suitable. Hence, a selective protection scheme requires a single ended (non-unit) algorithm ensuring selectivity, i.e., able to discriminate between internal faults, occurring on the protected line and external faults, occurring elsewhere in the grid.

In this technical field, EP3062185 discloses a method and a protective system for monitoring an electrical system having at least one measuring station, in particular a high-voltage direct current transmission system, comprising the following steps:

- for the respective measuring station by means of memory devices storing models of the system describing a respective state of the system in a respective estimating device ,
- integrated in an estimating bank;
- applying the respective estimator bank by comparing values measured by the respective measuring station with values of a respective model;
- determining the model with the smallest difference between the currently measured values and the own model-specific values, whereby the particular model indicates the current state of the system.

One drawback of the proposed solution is that the models used do not depend explicitly upon the physical characteristics of the grid and cannot be adapted if such characteristics were to change. In addition, for every fault, a specific model must be created which could lead to a non-detection of a fault if such model was not created in the data base in advance. However, some faults, in particular faults due to lightning strikes, may not be modeled in advance due to the stochastic nature of the fault current.

US 9 465 067 relates to a method based on the electromagnetic time reversal to locate faults in power network. This document describes a time reversal process for determining a fault location in an electrical power network comprising multi-conductor lines, comprises

- measuring at an observation point located anywhere along one of the multi-conductor lines, for each of the conductors of the multi-conductor line, respectively a fault-originated electromagnetic transient signal;
- defining a set of guessed fault locations each having a different determined location in the electrical power network, and each of the guessed fault locations is attributed a same arbitrary fault impedance;
- defining a network model for the electrical power network, based on its topology and multi-conductor lines electrical parameters capable of reproducing in the network model the electromagnetic traveling waves; and
- computing for each conductor a time inversion of the measured fault-originated electromagnetic transients signal.

The time reversal process method further comprises, as detailed herein, back-injecting a computed time inversion; calculating fault current signal energy; and identifying the fault location.

However this method focuses in particular on fault localization without discriminating the fault type which is important to send control command for applying the right protection actions and lightning strikes induced faults are the majority of faults in an overhead line which therefore need to be treated.

The problem with lightning strikes in particular is on one side their frequency and on the other side the fact that the lightning current waveform cannot be modeled per se and is in partly random.

Indeed, lightning is one of the most frequent sources of outages for power system components. Overhead transmission lines (OHL) in particular are frequently stroke by lightning. Lightning strikes can be classified depending on the stroke point, and the effect of the strike. Shield (or sky) wires are employed to protect the conductors from lightning. Lightning striking the shield wire or a transmission tower is referred to as indirect lightning. Depending on the magnitude of the lightning current and other parameters such as the grounding of the tower, it may cause the insulator to flash, which creates a fault, or create a disturbance voltage that propagates along the line. It may happen that lightning bypasses the shield wires and strikes a conductor, which is refers to as direct strike. Such strikes may also cause a fault or only cause a disturbance. Lightning strikes are not the only cause of fault (or disturbance) as many short-circuits can also be due to vegetation or pollution. Irrelevant of the source event, the protection algorithms needs be able to detect and identify faults types to open and isolate the faulty line while disturbances should be discarded by the protection system. The accurate location of the fault is important for line patrol as well as diagnosis and monitoring of the line.

Therefore, in order to apply the adequate protection actions, one needs to characterize what has happened at the fault location because even some direct lightning strikes do not impose an at least partial shut-down of the power transmission network: Lightning strikes may just cause a disturbance in the network and not a fault. In such a case, despite the important observed variations in voltage and current, the protection should not operate as the grid is still operational and healthy.

Therefore one object of the present invention is to improve fault detection and more specifically identification of the fault type with respect to the prior art, in particular for identifying and characterizing lightning induced faults.

To this extent, the present invention proposes a transient-based method for controlling protection actions in an electric power transmission and/ or distribution system having at least one current transmission line comprising the following steps:

- measurement of voltage and/or current at a specific location in the said power system of at least one travelling wave due to a suspected fault having occurred on a current transmission line,
- estimate initial voltage waveform at fault location by using an inverse physical wave propagation model applied to the measurements concerning the at least one travelling wave, and taking into account the distance between said specific location and the fault location,
- identification and classification of the fault in function of estimated initial voltage waveform at fault location,
- control of protection actions in function of the fault classification.

This allows distinguishing for example pollution / vegetation faults and several types of direct lightning strokes on the aerial conductor of the grid which can lead to a flashover where a protection actions must be put in place or mere disturbances which may lead to temporary protection actions or no protection actions at all.

The method according to the invention may comprise one or several of the following features taken alone or in combination:

The distance between said specific location and the fault location may be obtained independently from the measurement of voltage and/or current evolution at said specific location.

The distance between said specific location and the fault location may be obtained through at least following steps:

- measurement of voltage and/or current at a specific location in the said power system of at least a first travelling wave due to a suspected fault having occurred on a current transmission line,
- iterative processing comprising

- isolation from said measurement of the first traveling wave taking into account the distance between the said specific location and an estimated hypothetical location of the suspected fault,

- estimation of an initial voltage waveform at said computed hypothetical location by using an inverse physical wave propagation model applied to the measurements of the first travelling wave isolated from the measurement and taking into account the distance between said specific location and the computed hypothetical location of the suspected fault,

- isolation from said measurement at said specific location in the said power system of at least one subsequent travelling wave due to said suspected fault having occurred on said current transmission line and taking into account the distance between the said specific location and computed hypothetical location,

- simulation of the voltage and/or current evolution of said at least one subsequent travelling wave by applying the physical wave propagation model to the said estimated initial voltage waveform and taking into account the distance between the said specific location and computed hypothetical location,

- comparison of the simulated and measured voltage and/or current evolution of said subsequent traveling wave

- shifting of said computed hypothetical location for convergence of simulated and measured voltage and/or current evolutions,

- identification and classification of the suspected fault in function of the simulated subsequent travelling wave, and / or estimated initial voltage waveform at fault location, taking into account the computed hypothetical location,

- control of protection actions in function of the fault classification when a convergence criteria is met.

The electrical power transmission and / or distributor system is for example a high or medium voltage DC grid or a high or medium voltage AC grid.

Said physical wave propagation model is for example based on telegraph equation for describing the fault parameters and the behaviour of travelling waves due to the fault in the said electrical power transmission and /or distribution system.

Said physical model takes in particular into account modal voltage and current.

The convergence of the iteration comprises for example the minimization of a cost function of the difference of simulated and measured voltage and/or current evolutions.

The identification of a fault may comprise in addition a verification that the obtained fault location belongs to a predefined validity domain.

A specific location can be at an end of a current transmission line and/ or a relay and/or a breaker module and/ or a station.

The method may be started upon detection of an unusual behaviour with respect to a nominal functioning of the electrical power transmission and/or distribution system (100), an unusual behaviour comprising a voltage drop, a current increase, a crossing of a threshold or a combination of thereof.

Control of protection actions in function of the fault classification comprises for example activation of protection circuits in the said electrical power transmission and/or distribution system.

The fault classification may comprise at least a class for pollution/vegetation faults, a class for direct lightning strikes causing a flashover and a class for direct lightning strikes causing disturbance.

The fault classification can be carried out by machine learning.

The invention also relates to a device configured to carry out a transient-based method for controlling protection actions in an electric power transmission and/ or distribution system having at least one current transmission line, the device being configured to carry out the following steps :

- measurement of voltage and/or current at a specific location in the said power system of at least a first travelling wave due to a suspected fault having occurred on a current transmission line,

- estimate initial voltage waveform at fault location by using an inverse physical wave propagation model applied to the measurements concerning the at least first travelling wave, and taking into account the distance between said specific location and the fault location,

- identification and classification of the fault in function of estimated initial voltage waveform at fault location,

- control of protection actions in function of the fault classification.

The invention also relates to a transient-based diagnostic method for classifying disturbance events in an electric power transmission and/ or distribution system having at least one current transmission line comprising the following steps :

- measurement of voltage and/or current at a specific location in the said power system of at least one travelling wave due to a suspected fault having occurred on a current transmission line,
- estimate initial voltage waveform at fault location by using an inverse physical wave propagation model applied to the measurements concerning the at least one travelling wave, and taking into account the distance between said specific location and the fault location,

- identification and classification of the fault in function of estimated initial voltage waveform at fault location.

BRIEF DESCRIPTIONS OF THE DRAWINGS

Other advantages and characteristics will appear with the reading of the description of the following figures:

- figure 1 shows an example of a power distribution and transmission system and presents as example a synoptic scheme of a four station meshed HVDC grid,
- figure 2 shows an example of a flow chart of the method according to the invention,
- figure 3 shows a Bewley lattice diagram showing the position and direction of motion of every generated, reflected, and transmitted wave caused by a fault on a transmission line,
- figures 4A and 4B show graphs concerning the arrival time of modeled and unmodeled travelling waves,

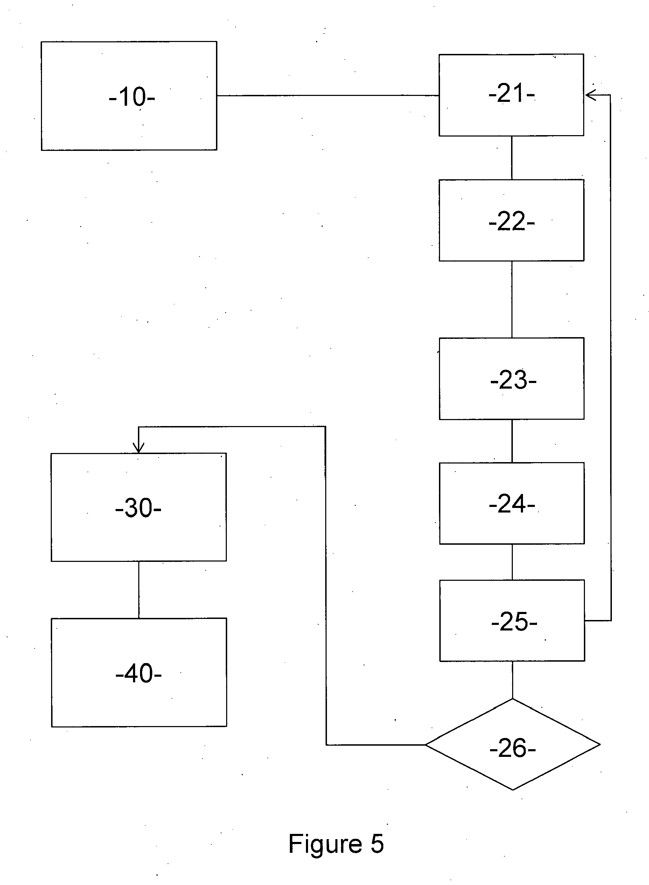

- figure 5 is a flow chart of an example of an embodiment where the distance between said specific location and the fault location is obtained by measurement,
- figures 6A and 6B show the modeled initial voltage compared to the output of EMT simulation for two events,
- figures 7A and 7B show the model of the subsequent waves arriving at station 1 and compared with EMT simulation,
- figure 8A show a graph representing the cost function for different possible fault distances,
- figure 8B shows a graph representing a comparison of a modeled subsequent voltage wave at station 1 with EMT simulation following a lightning strike on the positive pole,

DETAILED DESCRIPTION

The embodiment(s) in the following description are only to be considered as examples. Although the description may refer to one or several embodiments, this does not mean inevitably that every reference concerns the same embodiment, or that the characteristics apply only to a single embodiment. Simple characteristics of various embodiments can be also combined to new embodiments that are not explicitly described.

In general, the invention applies to high and medium AC and DC voltage electric power transmission and/or distribution systems or grids.

By way of example, a specific embodiment related to high or medium voltage direct current network will be described hereafter.

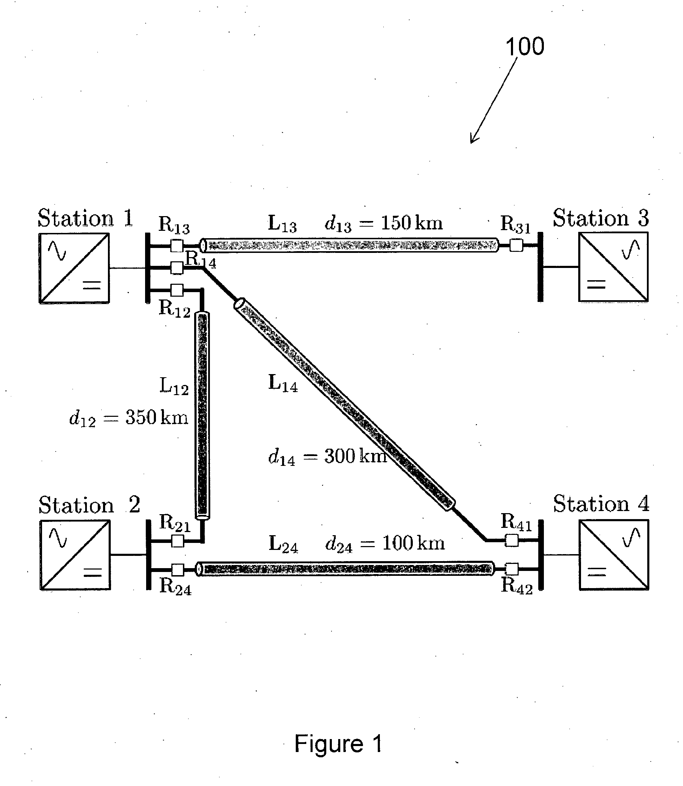

Figure 1 is a synoptic scheme of an example of power distribution and/or transmission system 100, in particular it shows a four-station meshed HVDC grid.

The grid 100 in this example comprises four DC current transmission lines $L_{12}$, $L_{13}$, $L_{23}$ and $L_{14}$. At each end of the transmission lines $L_{12}$, $L_{13}$, $L_{23}$, $L_{14}$ are disposed respectively one DC breaking module Ri,j ( i = 1 to 4, j = 1 to 4, i≠j - as set out in the drawing).

As an example, the fault may be happened on current transmission line $L_{14}$. This may cause a wave traveling towards stations 1 and 4 but also then to station 3 and back to station 1.

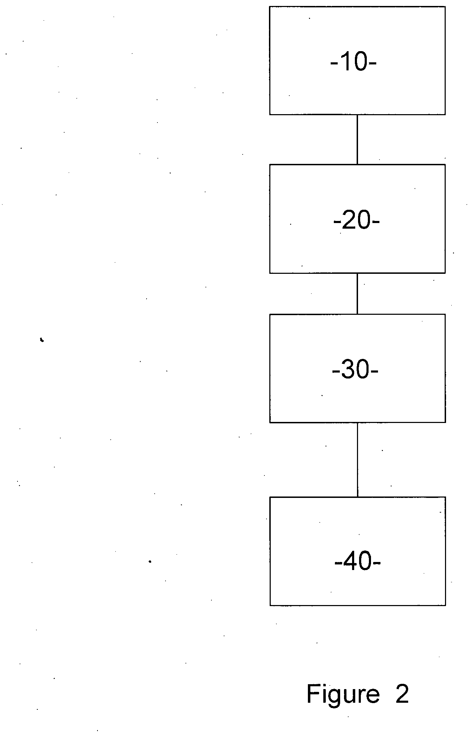

As will be set out hereafter in detail, the method according the invention comprises at least the following steps (see figure 2):

- measurement of voltage and/or current at a specific location in the said power distribution and / or transmission system 100 of at least one travelling wave (for example the first second or third one) due to a suspected fault having occurred on a current transmission line (step 10),
- estimate initial voltage waveform at fault location by using an inverse physical wave propagation model applied to the measurements concerning at least the one travelling wave, and taking into account the distance between said specific location and the fault location (step 20),
- identification and classification of the fault in function of estimated initial voltage waveform at fault location (step 30),
- control of protection actions in function of the fault classification (40).

In order to describe these steps more in depths, some modeling considerations are presented.

## FAULT VOLTAGE MODELING

Faults that occur on transmission lines generate transient phenomenon that can be described as traveling waves. In using a physical wave propagation model like traveling waves theory, one can obtain a model for example of the voltage at the line end. This model can be inverted to estimate the initial voltage at the fault location.

The estimated input voltage can in turn be used to compute subsequent traveling waves that reach the end of the line. At least one subsequent traveling wave which has been computed, in particular a second or third traveling *wave reaching a specific location where measurements of voltage and / or current are carried out, can be used then by inversion in order to estimate initial voltage waveform at fault location by using an inverse physical wave propagation model.

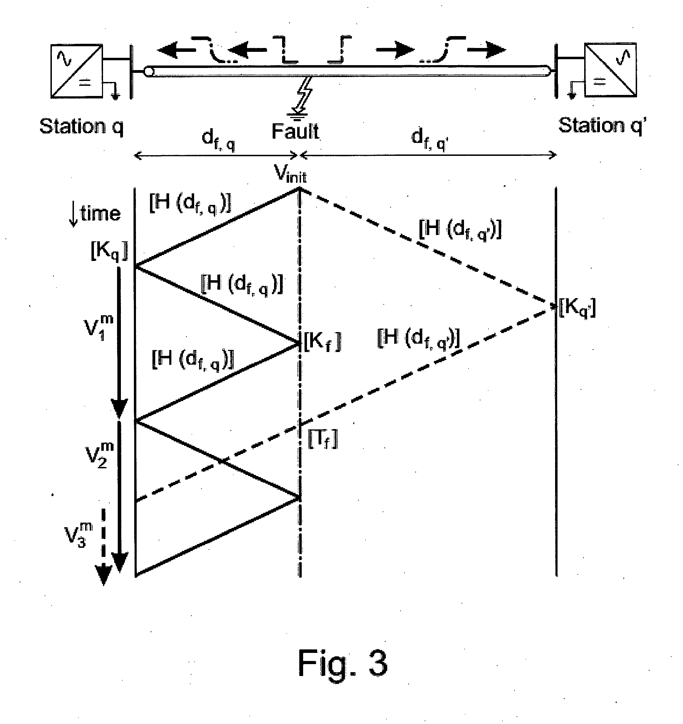

A generic transmission line is shown in figure 3, with stations q and q' and its extremities. Figure 3 shows in its lower part a Bewley lattice diagram showing the position and direction of motion of every generated, reflected, and transmitted wave caused by a fault on a transmission line. Consider a fault occurring at a distance $d_{f,q}$ from station q and $d_{f,q'}$ from station q'. The evolution of the voltage V (x, s) along the line is described in the Laplace domain by the Telegraphers equations

$$\frac{\partial^2 \mathbf{V}(x,s)}{\partial x^2} = [Z(s)][Y(s)]\mathbf{V}(x,s)$$

(eq. 1)

where [Z (s)] and [Y (s)] are the distributed series impedance and shunt admittance, respectively. To be solved, equation 1 must be decoupled through the transformation of phase voltage to modal voltage, using transformation matrix $[T_V]$. For the sake of simplicity, it is assumed all employed quantities, including measurements, in the rest of the article are in expressed in modal domain.

The solution of equation 1 consists of the superposition of two waves traveling in opposite directions. The wave traveling towards the positive x is

$$\mathbf{V}(x,s) = \underbrace{\exp\left(-[\Gamma(s)]x\right)}_{=[H(s,x)]} \mathbf{V}_{\text{init}}(s)$$

(eq. 2)

where $V_{\text{init}}$ is the initial surge at the fault location and
$[\Gamma(s)] = p[Z(s)][Y(s)]$
is the propagation matrix. When a forward $V_f$ wave is traveling from a medium of surge admittance $[Y_s,1]$ to a medium of surge impedance $[Y_s,2]$, a reflected wave $V_r = [K_{1\rightarrow2}] V_f$ and transmitted wave $V_{tm} = [K_{1\rightarrow2}] V_{fm}$ are created according to transmission coefficient

$$[K_{1\rightarrow2}] = ([Y_{s,2}] + [Y_{s,1}])^{-1}([Y_{s,1}] - [Y_{s,2}])$$

and reflection coefficient $[T_{1\rightarrow2}] = [K_{1\rightarrow2}]+[I_{nc}]$. The voltage measured at the interface corresponds to the transmitted wave.

Thus, the voltage at the end of the line due to the arrival of the first traveling wave after the fault occurrence is :

$$V_{t,1}(s, d_{f,q}) = \underbrace{([T_q(s)][H(s, d_{f,q})])}_{[H_1]} V_{\text{init}},$$

(eq. 3)

where $[T_q(s)]$ is the transmission coefficient from the line to the station q, which may also comprises the influence of other lines connected to station q. If the characteristics of the fault are known, the initial voltage at the fault $V_{init}$ may be computed. A pollution fault can for instance be represented as a voltage source connected to the ground, in series with a resistance $R_f$ that closes at time $t_f$ onto the faulted conductor.

The initial voltage surge is then

$$V_{init}(s, R_f) = [K_f(s, R_f)] \frac{\exp(-t_f s)}{s} v_{bf}$$

where $v_{bf}$ is the phase voltage at the fault location just before the occurrence of the fault and $K_f$ the reflection coefficient from the line to the fault.

The voltage due to subsequent waves can also be computed. The wave that is reflected at the fault location and that travels back towards station q is

$$\mathbf{V}_{t,2}(s, \mathbf{p}) = [T_q] [H(s, d_f)] [K_{e \to f}(R_f)] \times$$
$$[H(s, d_f)] [K_q(s)] [H(s, d_{f,q})] V_{init} \quad \text{(eq. 4)}$$

The vector of fault parameters $\mathbf{p} = (R_f, d_f, ....)$ gathers parameters that characterize the fault, in particular the fault location $d_f = d_{f,q}$ and the fault resistance $R_f$. Similarly the voltage wave that travels first towards the station q' at the remote end of the line can be computed as

$$\mathbf{V}_{t,3}^c(s, \mathbf{p}) = [T_q] [H(s, d_{f,q})] [T_{e \to f}(R_f)] \times$$
$$[H(s, d_{f,q'})] [K_{q'}(s)] [H(s, d_{f,q'})] V_{init} \quad \text{(eq. 5)}$$

With this approach, any wave that travels throughout the grid can be modeled, assuming the characteristics of the grid and the fault parameters are known and that the fault characteristics are available.

However, in the general case, the characteristics of the fault cannot be known in advance. In particular in the case of faults due to lightning strikes, the initial fault voltage depends on the lightning current. In particular, lightning current is stochastic and two different lightning strokes may even have significantly different waveforms, e.g., monopolar or bipolar.

Thus, in the general case, the forward model of equation 3 can thus not be directly applied as the initial fault voltage $V_{init}$ is unknown. Conversely, the initial fault voltage can be computed based on the measured voltage at the end of line by inverting equation 3, i.e.,

$$V_{init}^m(s, d_{f,q}) = [H_1(s, d_{f,q})]^{-1} V_{t,1} \quad \text{(eq. 6)}$$

Taking the inverse of $[H_l(s, d_{f,q})]$ is not straightforward as the transfer function comprises delays, making the inverse acausal. One should thus compensate for this delay to compute equation 6. It is noteworthy that equation 6 assumes the fault distance is known or at least estimated, but equation 6 does not depend on the fault resistance. The initial fault voltage can thus be computed regardless of the type of fault and fault resistance. Taking the inverse Laplace transform of equation 6, the initial fault voltage can be computed in temporal domain as

$$v_{init}^m(t, d_{f,q}) = \mathcal{L}\left([H_1(s, d_{f,q})]^{-1}\right) \otimes \mathbf{v}_{t,1}(t) \quad \text{(eq. 7)}$$

The estimated initial fault voltage can then be used to compute the subsequent traveling waves as

$$
\mathbf{V}_{t,2}^{m}(s,\mathbf{p}) =
\underbrace{[T_q]\,[H(s,d_f)]\,[K_{e\to f}(R_f)]\,[H(s,d_f)]\,[K_q(s)]\,[T_q(s)]^{-1}}_{=:[H_{\mathrm{close}}(s,\mathbf{p})]}\,\mathbf{V}_{t,1}
\qquad (\text{eq. } 9)
$$

The expression of equation 9 allows to compute the second TW from the fault based on the first recorded TW. It depends on the fault distance as well as the fault resistance, due to the reflection of the TW at the fault location, through the coefficient $[K_{e\to f}(R_f)]$. Equation 9 can be directly extended to any wave traveling between the line end and the fault location, and is thus better formulated as

$$
\mathbf{V}_{t,n+1}^{m}(s,\mathbf{p}) = [T_q]\,[H(s,d_f)]\,[K_{e\to f}(R_f)]\times
$$
$$
[H(s,d_f)]\,[K_q(s)]\,[T_q(s)]^{-1}\,\mathbf{V}_{t,n}. \qquad (\text{eq. } 10)
$$

A model of the first wave cannot be obtained if the fault location and the initial fault voltage are not known and $V^m_{t,1}$ is set in this case to 0.

Equation 10 can be interpreted as a model of the additional distortion and attenuation of any wave that reaches the station q after it has been reflected at the fault location. In this specific case the model is directly causal, which simplifies the computations. The equation 10 allows to compute the total voltage at the station q as

$$
\mathbf{V}_{t}^{m}(s,\mathbf{p}) = \sum_{n=1}^{\infty} \mathbf{V}_{t,n+1}^{m}(s,\mathbf{p})
$$
$$
= \sum_{n=1}^{\infty} [H_{\mathrm{close}}(s,\mathbf{p})]\,\mathbf{V}_{t,n}
$$
$$
= [H_{\mathrm{close}}(s,\mathbf{p})]\sum_{n=1}^{\infty}\mathbf{V}_{t,n}
$$
$$
\mathbf{V}_{t}^{m}(s,\mathbf{p}) = [H_{\mathrm{close}}(s,\mathbf{p})]\,\mathbf{V}_{t}. \qquad (\text{eq. } 11)
$$

The latter formulation by equation 11 gives a model of the total voltage at station q based on the total measured voltage $V_t$. By contrast equation 10 requires to isolate the n-th TW $V^c_{t,n}$ from the total measurements $V^c_t$ which may not be easily done due to the superposition of all the waves upon a certain time window.

This model depends explicitly on the fault parameters and in particular on the fault location. As will be shown hereafter, it can also be used to estimate the fault location unless the fault location is for example obtained otherwise and independently for example measurements along the power transmission line. As example, US2020116776A1 in the name of the applicant describes a possible optical fault location method.

The example of a physical wave propagation model developed hereabove of the voltage at station q that does not require a priori knowledge on the initial fault voltage. This model accurately represents the voltage at the end of the line except for the effect of the first traveling wave, as this wave is used to estimate the initial fault voltage. The model is valid until waves that traveled through a path not represented in the model arrive at the end of the line. Thus, the model is valid over a certain time interval $[t_1, t_2]$. By convention, all times are given with respect to the detection time, which corresponds to the detection of the first wave, i.e.,

$$t_{\text{detec}} = t_{\text{f}} + \frac{d_{\text{f}}}{c_{\text{w}}} = 0,$$

where $c_{\text{w}}$ is the TW speed. Over this interval, and for the true value of the fault parameters $\mathbf{p}^*$, the voltage measurements v (t) can be described as

$$\mathbf{v}\left(t\right) = \mathbf{v}^{\mathbf{m}}\left(t, \mathbf{p}^*\right) + \varepsilon\left(t\right), \quad \forall t \in \left[t_1, t_2\right] \quad \text{(eq. 12)}$$

where $\varepsilon$ (t) represents the measurement noise, which is assumed to follow a Gaussian-centered distribution. It follows from equation 12 that the maximum likelihood estimate of the fault parameters is

$$\hat{\mathbf{p}} = \arg\min_{\mathbf{P}} = \sum_{t_k=t_1}^{t_2} \left(\mathbf{v}\left(t_k\right) - \mathbf{v}^{\mathbf{m}}\left(t_k, \mathbf{p}\right)\right)^2 \quad \text{(eq. 13)}$$

In order to evaluate an appropriate observation window, a graph-based approach is proposed. Instant $t_1$ corresponds to the inception of the first modeled wave, and is thus directly available within the model. For faults occurring in the first half of the transmission line, it is the reflection of the first wave at the fault location, whose arrival time is order

$$t_1\left(d_{\text{f}}\right) = 2\frac{d_{\text{f}}}{c_{\text{w}}}$$

For faults occurring in the second half of the line, $t_1$ is given by the wave reflected at the remote station. Instant t2 is defined as the arrival time of the first wave which is not included in the model. Depending on the grid topology, more or less waves may be included in the model.
As an illustrative example, consider that the waves that are included in the model are

- the waves traveling between the fault and the station and,
- the waves traveling towards the remote station, reflected back and transmitted at the fault location, and reaching station q.

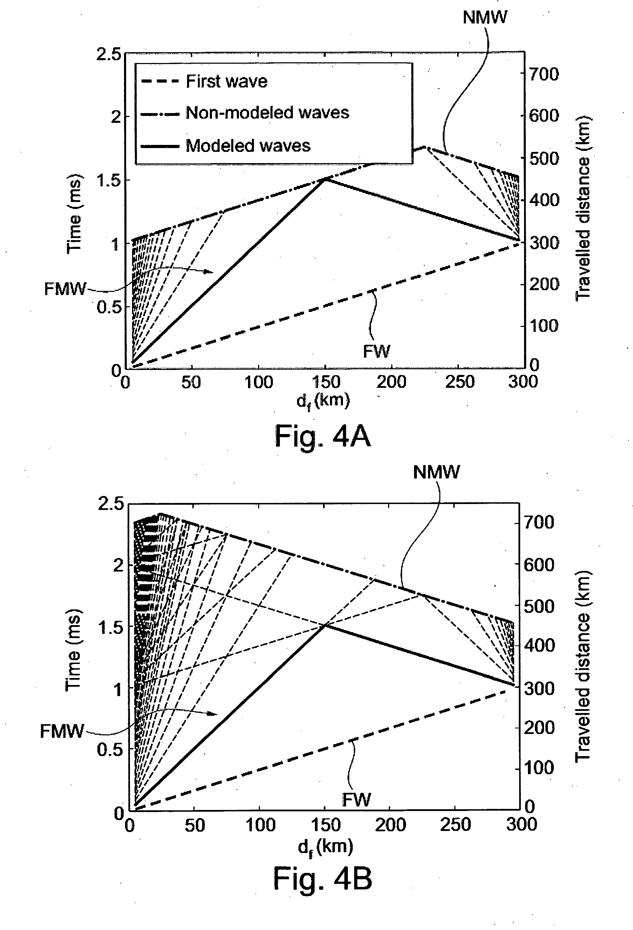

Non-modeled waves thus refer to any wave reaching station q that does not follow the two aforementioned paths. In the grid depicted in Figure 1 and for a fault occurring on line $L_{14}$, this may for instance be a wave traveling towards station 1, then to station 3 and back to station 1. Besides the choice of the modeled waves, the arrival time of the first non-modeled wave depends on the network topology as well as the fault position.
Those two elements are generally known as the grid configuration is known and the computation of $t_2$ can be seen as a shortest paths problem, which can be solved using a graph-theory based approach.
The network of figure 1 can be represented as an undirected graph with nodes (stations) and weighted edges (lines). The weights account for the length of the lines, or equivalently for the propagation times, as it is assumed the wave speed is constant. As an example, line $L_{14}$ between stations S1and S4 is affected by the fault and is divided into two edges. The fault itself is modeled as a node. The fault node F can be considered as a sender node, and the station at which the voltage is measured, S1, can be considered as the receiver node. The edges are divided into modeled edges (typically the two edges of the faulty line), and non-modeled edges (typically the remaining lines of the grid). Finding $t_2$ amounts to determine the first shortest path from the starting node to the receiving node that includes a non-modeled edge.
For a fault occurring on line $L_{14}$ at various distance $d_{\text{f}}$, the arrival times of different TW are displayed in Figure 4A and 4B. The first wave, which is not modeled, is referenced FW (**F**irst **W**ave). The first modeled wave is referenced FMW (**F**irst **M**odeled **W**ave), the other modeled waves are dashed lines. The first non-modeled wave is marked NMW (**N**on **M**odeled **W**ave). The available observation window is given by the difference between the arrival time of the line MW and the line NMW. On Figure 4A; only the waves traveling through the faulty line are modeled, i.e., between stations S1 and S4. The change of slope in the curve NMW indicates that the paths taken by the first non-modeled wave changes at around 230 km. Before, it is the wave reflected at station S3 that arrives first while after it is the wave that travels towards S2.

For the fault distance $d_f$ = 150 km, the first modeled wave arrives at the same instant as the first non-modeled wave, which means no observation window would available to estimate the fault location. Knowing that the first non-modeled wave at this distance is due to the reflection at station 3, the model can be extended to account for such reflections. The results are presented in Figure 4B. The former line limiting the observation window for fault distances between ranging from 0 to 220 km is now dashed as it has been included in the model. For a relay monitoring a given line, here $L_{14}$, it should be ensured that for any possible fault, the observation window is always limited to modeled waves. Thus the length of the observation window is selected as

$$\tau = \min_{d_f} \left( t_2 \left( d_f \right) - t_1 \left( d_f \right) \right)$$

In the example displayed in Figure 4B, $\tau$ = 0.5 ms.

Once the appropriate observation window has been determined, the estimation of the fault parameters via equation 13 requires the minimization of the cost function

$$C(\mathbf{p}) = \sum_{t_k = t_1}^{t_2} \left( v \left( t_k \right) - v^{\mathrm{m}} \left( \mathbf{p}, t_k \right) \right)^2$$

$$(\text{eq. } 14)$$

Preliminary observations showed that the sensitivity of the cost function with respect to the fault resistance is very small. Thus, the estimation of the fault parameters was reduced to the estimation of the fault distance, considering an average value for the fault resistance. In addition, the shape of the cost function as a function of the fault distance may present several local minima. Although global optimization techniques exist, local approaches were chosen for their better computation performances. Iterative optimization techniques such as the Levenberg-Marquardt algorithm are particularly well suited to minimize quadratic cost function such as equation 14. To avoid that the algorithm converges towards a local minimum, several algorithms may by launched in parallel with different initialization points. The estimate associated with the lowest value of the cost function is then selected.

**Fault localization, identification, classification and control of protection actions**

Taking into account the above exposures, in only monitoring at dedicated specific locations in the power distribution and /or transmission system 100 current i and / or voltage v of at least a one travelling wave due to a suspected fault having occurred on a current transmission line, in particular at the terminals of the currents transmission lines like $L_{12}$, $L_{13}$, $L_{24}$, or $L_{14}$ for example,

- one can estimate initial voltage waveform at fault location by using an inverse physical wave propagation model applied to the measurements concerning the at least one travelling wave, and taking into account the distance between said specific location and the fault location,
- one can identify and classify the fault in function of estimated initial voltage waveform at fault location, and finally it is possible
- to control protection actions in function of the fault classification.

The above mentioned specific locations may be anywhere in the power transmission and/ or distribution system but preferentially a specific location is at an end of a current transmission line like for example $L_{12}$, $L_{13}$, $L_{23}$ and/ or a

relay and/or a breaker module and/ or a station like station 1, 2, 3 or 4.

The above described method is for example started upon detection of an unusual behavior with respect to a nominal functioning of the electrical power transmission and/or distribution system 100. An unusual behavior comprising among others a voltage drop, a current increase, a crossing of a threshold or a combination of thereof.

As stated above the distance between said specific location and the fault location may be obtained independently from the measurement of voltage and/or current evolution at said specific location. For example ...(please give example).

Or as alternative, the distance between said specific location and the fault location is obtained through at least following steps:

- measurement of voltage and/or current at a specific location in the said power system 100 of at least a first travelling wave due to a suspected fault having occurred on a current transmission line (step 10 - this step is identical to step 10 of figure 2),
- iterative processing (replacing step 20 in figure 2) comprising

  ➢ isolation from said measurement of the first traveling wave taking into account the distance between the said specific location and a computed hypothetical location of the suspected fault (step 21),
  ➢ estimation of an initial voltage waveform at said computed hypothetical location by using an inverse physical wave propagation model applied to the measurements of the first travelling wave isolated from the measurement and taking into account the distance between said specific location and the computed hypothetical location of the suspected fault (step 22),
  ➢ isolation from said measurement at said specific location in the said power system (100) of at least one subsequent travelling wave due to said suspected fault having occurred on said current transmission line and taking into account the distance between the said specific location and computed hypothetical location (step 23),
  ➢ simulation of the voltage and/or current evolution of said at least one subsequent travelling wave by applying the physical wave propagation model to the said estimated initial voltage waveform and taking into account the distance between the said specific location and computed hypothetical location (step 24),
  ➢ comparison of the simulated and measured voltage and/or current evolution of said subsequent traveling wave (step 25),
  ➢ shifting of said computed hypothetical location for convergence of simulated and measured voltage and/or current evolutions (step 26) until a convergence criteria is met, if not go back to step 21,
  ➢ identification and classification of the suspected fault in function of the simulated subsequent travelling wave, and / or estimated initial voltage waveform at fault location, taking into account the computed hypothetical location (step 30 - similar to step 30 in figure 2),
  ➢ control of protection actions in function of the fault classification (step 40 - similar to step 40 in figure 2).

According to a further development, a verification is carried out in order to determine that the obtained fault location belongs to a predefined validity domain.

One of the last steps of the above described method comprises the control / activation of protection actions. This control of protection actions is carried out in function of the fault classification which comprises for example activation of protection circuits in the said electrical power transmission and/or distribution system 100.

To this extent the fault classification comprises for example one or several classes like a class for pollution/vegetation faults, a class for direct lightning strikes causing a flashover and a class for direct lightning strikes causing disturbance.

The fault classification may be carried out by machine learning, in particular in using "support-vector machines" (SVMs, also support-vector networks) which are supervised learning models with associated learning algorithms that analyze data for classification and regression analysis. SVM can perform linear classification as well as a non-linear classification using what is called the kernel trick, implicitly mapping their inputs into high-dimensional feature spaces. Both approaches were used for classification and for 4 different classes comprising "pollution fault causing pole to ground", "lightning strike causing disturbance", "lightning strike causing negative to ground" and "lightning strike causing positive to negative to ground", a 100% accuracy has been achieved.

This is a quite outstanding result because it allows that the necessary protection actions can be carried out with a great reliability. In particular faults classified as disturbances need no activation of a protection circuit and functioning of the power transmission and distribution system 100 does not need to be interrupted which is quite an important advantage for operating such a power system.

In particular, lightning strikes causing disturbance with no need of protection activation account for the majority of faults in particular an aerial power transmission and distribution system 100.

In particular for post-event analysis, the above described method may be carried out as a transient-based diagnostic method for classifying disturbance events in an electric power transmission and/ or distribution system having at least one current transmission line. It comprises all the steps as described above except for control step 40.

Such post analysis may be interesting in order to understand what disturbance events have taken place on the electric power transmission and/ or distribution system and to draw conclusions of control for the future.

The above method has been tested and simulation results have been achieved.

**Initial fault voltage due to a direct lightning strike** :

Consider a direct lightning strike occurring on the negative pole of line $L_{12}$, at a distance $d_f$ = 70 km. Two different set of lightning parameters have been tested, corresponding to two different events. The first lightning current has a peak value $i_{max}$ = 10 kA and halftime value $t_h$ = 75 us while the stroke tower has a ground resistance of $R_g$ = 50 $\Omega$. The second lightning current has a peak value $i_{max}$ = 5 kA and half-time value $t_h$ = 21 us while the stroke tower has a ground resistance of $R_g$ = 20 $\Omega$.

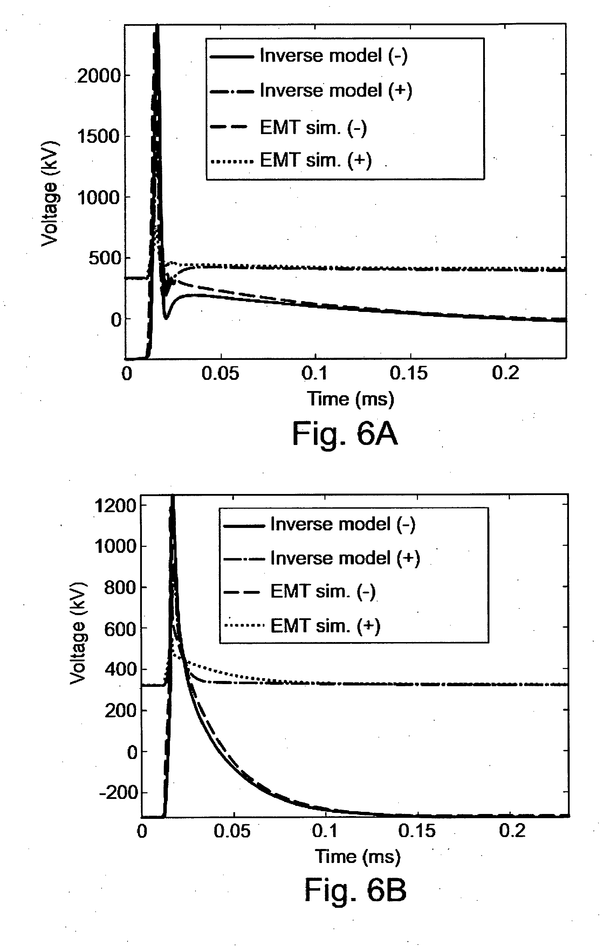

In the first event, the over-voltage at the stroke tower causes the flashover of the insulator string, inducing a fault. In the second event, the magnitude of the lightning current is smaller and the insulation withstands the overvoltage, causing the lightning current to propagate as a disturbance throughout the stroke conductor without causing any fault and thus without the need to activate a protection circuit. Assuming the fault distance is known, the modeled initial voltage can be compared to the output of EMT simulation for both events as shown in figures 6A and 6B. Figures 6A and 6B show the modeled initial voltage following a direct lightning strike on line $L_{12}$ which causes a pole to ground fault (figure 6A) and a disturbance (figure 6B), compared with EMT simulation. In both cases, the overvoltage on the negative pole of about is well represented as well as the tail of the waveform.

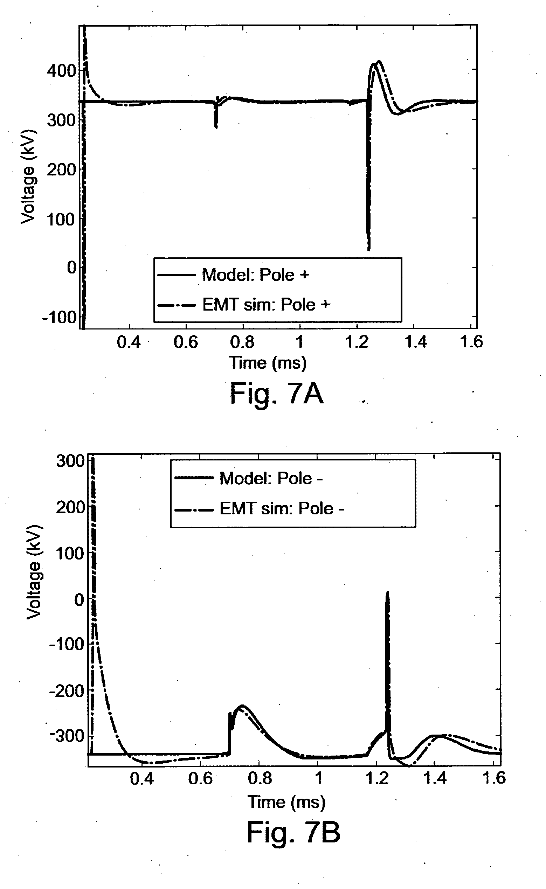

It is significant that the consequence of the strike (pole-to-ground fault or disturbance) is not required to obtain the initial fault voltage. This was expected as the reflection coefficient at the fault location is not required in equation 3. For the first event where a negative pole-to-ground fault occurs, the model of the subsequent waves arriving at station 1 is depicted in Figures 7A and 7B (pole to ground fault (figure 7A) and a disturbance (figure 7B) and compared with EMT simulation. As in this example the first measured wave is used to determine the initial fault wave, it cannot be employed to model the station voltage, at the output of the model is arbitrarily set to 0 until the second wave arrives. It can be noticed here that the wave arriving at $d_f$ = 0.7 ms is due to the reflection at the fault location while the surge at about 1.2 ms is due to the reflection of the first wave at station 3.

**Fault location :**

Let's consider a first event of a negative pole-to-ground fault occurring on line $L_{14}$ at a distance $d^*_f$ = 50 km from station 1. The parameters of the lightning current are $i_{max}$ = 10 kA and half-time value $t_h$ = 34 $\mu$s and tower grounding resistance is $R_g$ = 65 $\Omega$. As described above, the fault location calculation can be launched from different initial points, for example $d_{f,init}$ = [5, 25, 45, 65, 85, 105, 125, 145, 165, 185] km.

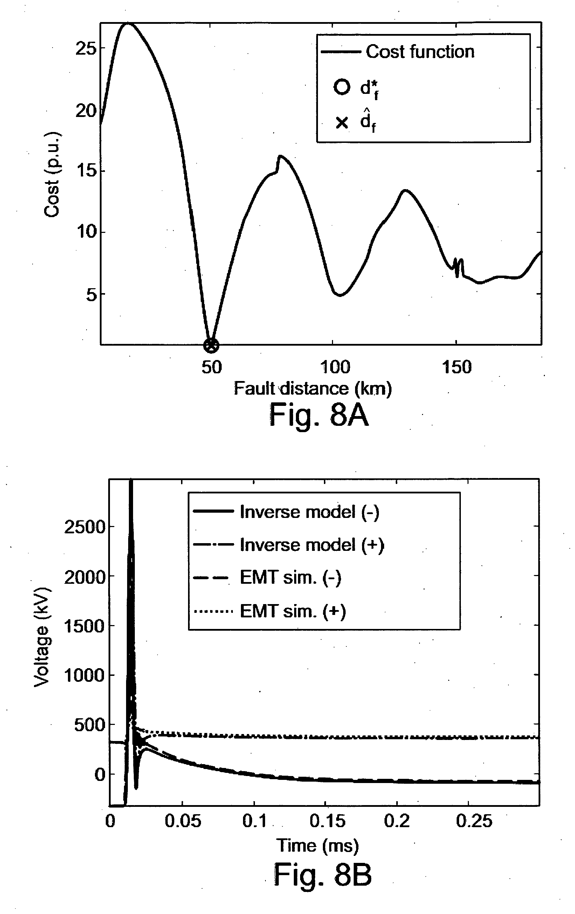

As explained above, an appropriate length for the observation window is $\tau_{max}$ = 0.5 ms. Though the grounding resistance is unknown, the fault resistance is set to $R_f$ = 10 $\Omega$ and not estimated along with the fault distance. The cost function (equation 14) is depicted for all possible fault distances in Figure 8A, showing that a global minimum is indeed present at $d_f$ = $d^*_f$ = 50 km, though several local minima also appear.

This justifies the fact for multiple initialization points. The two initial points 25 km and 45 km converges towards the global minima and the estimated fault distance is $\hat{d}_f$ = 50$km$, showing an error of less than a tower span (approx. 300 m) (upper graph of figure 8A).

Figure 8B shows a graph representing a comparison of the modeled initial voltage waveform at the fault location with EMT simulation following a lightning strike on the positive pole,

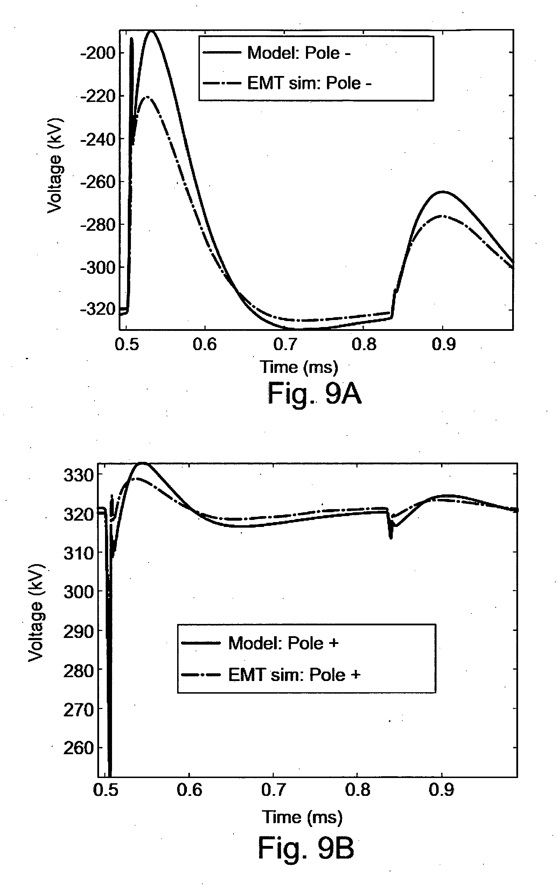

The model of the subsequent waves is compared with the EMT simulation in Figure 9A : positive pole - figure 9B: negative pole. Figures 9A and 9B show that a subsequent, in particular a second travelling wave can be simulated by the proposed method with a quite good precision.

The mismatch between the simulated and model voltage of about 20 kV is related to the value of the fault resistance $R_f$ = 10 $\Omega$ employed in the model that does not account for the value of the tower grounding $R_g$ = 65 $\Omega$. It is compelling that this difference does not degrade at all the accuracy of the estimated fault distance.

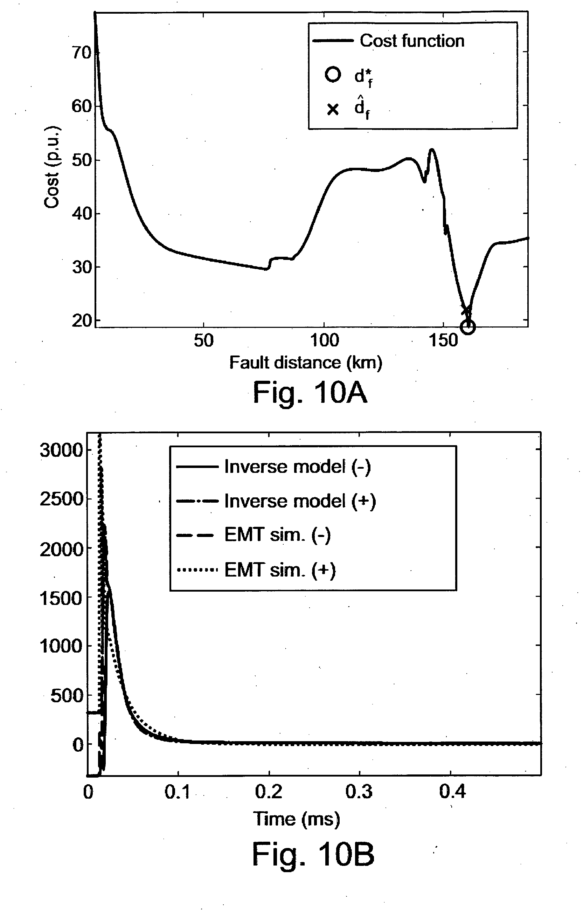

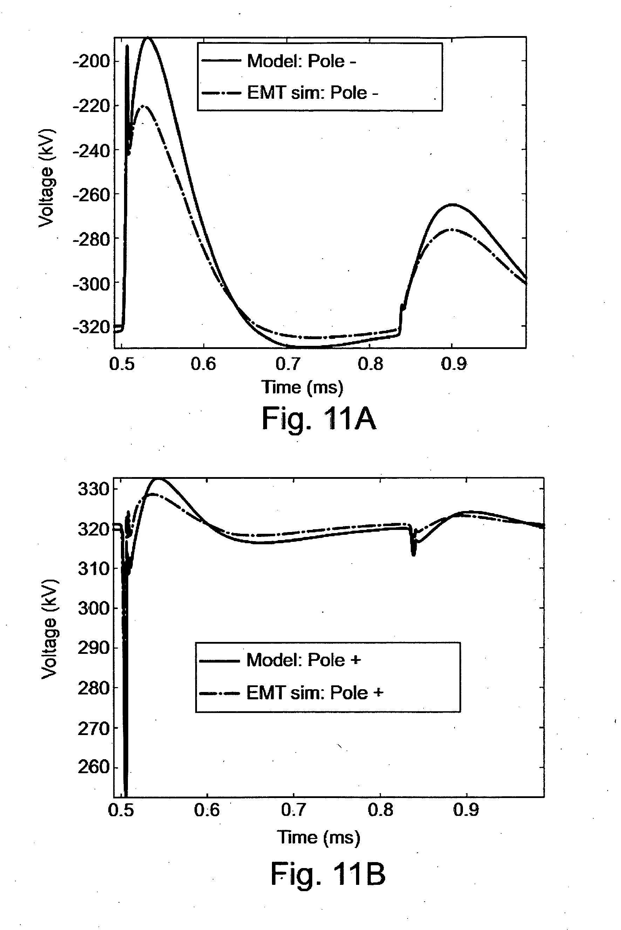

A second event is considered with a lightning strike occurring on the negative pole of line $L_{14}$ at a distance $d^*_f$ = 160 km from station 1. The parameters of the lightning current are $i_{max}$ = 33 kA , half-time value $t_h$ = 16 $\mu$s and tower grounding resistance is $R_g$ = 80 $\Omega$. The cost function (equation 14) is depicted for all possible fault distances in Figure 10A, showing a global minimum is indeed present at $d_f$ = $d^*_f$ = 160 km and the estimated fault distance is $\hat{d}_f$ = 159.2$km$. The estimated initial fault voltage is compared with EMT simulation in Figure 10B, where the convergence of the two pole voltages indicates a pole to pole to ground fault has occurred. The model of the subsequent waves is compared with the EMT simulation in Figure 11A and 11B and shows a quite good match that is sufficient for fault classification and taking the necessary protection actions.

As conclusion, it has been demonstrated that the here described method allows upon some measurements to estimate the initial waveform at fault location and that to classify the faults and to take in function of the classification result the necessary protection actions if needed. Therefore, operation of a power distribution and transmission can be optimized and in particular interruptions due to mere disturbances can be avoided.

**Claims**

1.  Transient-based method for controlling protection actions in an electric power transmission and/ or distribution system (100) having at least one current transmission line ($L_{12}$, $L_{13}$, , $L_{14}$, $L_{24}$) comprising the following steps :

    - measurement (10) of voltage and/or current at a specific location in the said power system (100) of at least one travelling wave due to a suspected fault having occurred on a current transmission line,
    - estimate (20) initial voltage waveform at fault location by using an inverse physical wave propagation model applied to the measurements concerning the at least one travelling wave, and taking into account the distance between said specific location and the fault location,
    - identification and classification (30) of the fault in function of estimated initial voltage waveform at fault location,
    - control (40) of protection actions in function of the fault classification.

2.  Method according to the preceding claim, where the distance between said specific location and the fault location is obtained independently from the measurement of voltage and/or current evolution at said specific location.

3.  Method according to claim 1, where the distance between said specific location and the fault location is obtained through at least following steps:

    - measurement of voltage and/or current at a specific location in the said power system (100) of at least a first travelling wave due to a suspected fault having occurred on a current transmission line,
    - iterative processing comprising

        - isolation from said measurement of the first traveling wave taking into account the distance between the said specific location and an estimated hypothetical location of the suspected fault,
        - estimation of an initial voltage waveform at said computed hypothetical location by using an inverse physical wave propagation model applied to the measurements of the first travelling wave isolated from the measurement and taking into account the distance between said specific location and the computed hypothetical location of the suspected fault,
        - isolation from said measurement at said specific location in the said power system (100) of at least one subsequent travelling wave due to said suspected fault having occurred on said current transmission line and taking into account the distance between the said specific location and computed hypothetical location,
        - simulation of the voltage and/or current evolution of said at least one subsequent travelling wave by applying the physical wave propagation model to the said estimated initial voltage waveform and taking into account the distance between the said specific location and computed hypothetical location,
        - comparison of the simulated and measured voltage and/or current evolution of said subsequent traveling wave
        - shifting of said computed hypothetical location for convergence of simulated and measured voltage and/or current evolutions,
        - identification and classification of the suspected fault in function of the simulated subsequent travelling wave, and / or estimated initial voltage waveform at fault location, taking into account the computed hypothetical location,
        - control of protection actions in function of the fault classification when a convergence criteria is met.

4.  Method according to any preceding claim, where said electrical power transmission and / or distributor system (100) is a high or medium voltage DC grid.

5.  Method according to any of claims 1 to 4, where said electrical power transmission and / or distributor system (100) is a high or medium voltage AC grid.

6.  Method according to any preceding claim, where said physical wave propagation model is based on telegraph equation for describing the fault parameters and the behavior of travelling waves due to the fault in the said electrical power transmission and /or distribution system (100).

7. Method according to any preceding claim, where said physical model takes into account modal voltage and current.

8. Method according to any preceding claims, where the convergence of the iteration comprises the minimization of a cost function of the difference of simulated and measured voltage and/or current evolutions.

9. Method according to any preceding claim, where identification of a fault comprises in addition verification that the obtained fault location belongs to a predefined validity domain.

10. Method according to any of claims 1 to 9, where a specific location is at an end of a current transmission line ($L_{12}$, $L_{13}$, $L_{23}$) and/ or a relay and/or a breaker module and/ or a station (113, 213, 313).

11. Method according to any preceding claim, where the method is started upon detection of an unusual behavior with respect to a nominal functioning of the electrical power transmission and/or distribution system (100), an unusual behavior comprising a voltage drop, a current increase, a crossing of a threshold or a combination of thereof.

12. Method according to any preceding claim, where control of protection actions in function of the fault classification comprises activation of protection circuits in the said electrical power transmission and/or distribution system (100).

13. Method according to any preceding claim, where the fault classification comprises at least a class for pollution/vegetation faults, a class for direct lightning strikes causing a flashover and a class for direct lightning strikes causing disturbance.

14. Method according to any preceding claim, where the fault classification is carried out by machine learning.

15. Device configured to carry out a transient-based method for controlling protection actions in an electric power transmission and/ or distribution system (100) having at least one current transmission line (L12, L13, L23), the device being configured to carry out the following steps :

   - measurement of voltage and/or current at a specific location in the said power system (100) of at least a first travelling wave due to a suspected fault having occurred on a current transmission line,
   - estimate initial voltage waveform at fault location by using an inverse physical wave propagation model applied to the measurements concerning the at least first travelling wave, and taking into account the distance between said specific location and the fault location,
   - identification and classification of the fault in function of estimated initial voltage waveform at fault location,
   - control of protection actions in function of the fault classification.

16. Transient-based diagnostic method for classifying disturbance events in an electric power transmission and/ or distribution system (100) having at least one current transmission line ($L_{12}$, $L_{13}$, , $L_{14}$, $L_{24}$) comprising the following steps :

   - measurement (10) of voltage and/or current at a specific location in the said power system (100) of at least one travelling wave due to a suspected fault having occurred on a current transmission line,
   - estimate (20) initial voltage waveform at fault location by using an inverse physical wave propagation model applied to the measurements concerning the at least one travelling wave, and taking into account the distance between said specific location and the fault location,
   - identification and classification (30) of the fault in function of estimated initial voltage waveform at fault location.

100

Station 1 $R_{13}$ $L_{13}$ $d_{13} = 150\,\mathrm{km}$ $R_{31}$ Station 3

$R_{14}$

$R_{12}$

$L_{12}$

$d_{12} = 350\,\mathrm{km}$

$L_{14}$

$d_{14} = 300\,\mathrm{km}$

Station 2 $R_{21}$

$R_{24}$ $L_{24}$ $d_{24} = 100\,\mathrm{km}$ $R_{41}$ Station 4

$R_{42}$

Figure 1

Figure 2

Fig. 3

Fig. 4A

Fig. 4B

Figure 5

Fig. 6A

Fig. 6B

Fig. 7A

Fig. 7B

Fig. 8A

Fig. 8B

Fig. 9A

Fig. 9B

Fig. 10A

Fig. 10B

Fig. 11A

Fig. 11B

Europäisches
Patentamt

European
Patent Office

Office européen
des brevets

# EUROPEAN SEARCH REPORT

Application Number

EP 22 31 5295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 404 130 A (CHIFENG POWER SUPPLY COMPANY OF STATE GRID EAST INNER MONGOLIA ELECTRI) 10 July 2020 (2020-07-10) | 1-5, 10-16 | INV. H02H7/26 H02H1/00 |
| Y | * paragraphs [0034] - [0045]; figures 1,2,4 * | 6-9 | |
| Y | VERRAX PAUL ET AL: "Fast Fault Identification in Bipolar HVDC Grids: A Fault Parameter Estimation Approach", IEEE TRANSACTIONS ON POWER DELIVERY, IEEE SERVICE CENTER, NEW YORK, NY, US, vol. 37, no. 1, 4 February 2021 (2021-02-04), pages 258-267, XP011898537, ISSN: 0885-8977, DOI: 10.1109/TPWRD.2021.3056876 [retrieved on 2022-01-20] * Section III; figures 1,2 * | 6-9 | |
| A | WO 2019/232595 A1 (FEDERATION UNIV AUSTRALIA [AU]) 12 December 2019 (2019-12-12) * pages 21-30; figures 3,13,15 * | 1,15,16 | TECHNICAL FIELDS SEARCHED (IPC) H02H G01R |

The present search report has been drawn up for all claims

| Place of search | Date of completion of the search | Examiner |
|---|---|---|
| Munich | 28 April 2023 | Colombo, Alessandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 31 5295

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2023

| Patent document cited in search report | | Publication date | Patent family member(s) | | Publication date |
|---|---|---|---|---|---|
| CN 111404130 | A | 10-07-2020 | NONE | | |
| WO 2019232595 | A1 | 12-12-2019 | AU | 2019280259 A1 | 07-01-2021 |
| | | | WO | 2019232595 A1 | 12-12-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3062185 A
- US 9465067 B

- US 2020116776 A1